# EUROPEAN PATENT SPECIFICATION

(11) **EP 1 463 137 B1**
(45) Date of publication and mention of the grant of the patent: **27.03.2013**
(21) Application number: 03021823.4
(22) Date of filing: 26.09.2003
(51) Int. Cl.: H01M 8/04, F16L 37/23, F17C 11/00, F16L 37/32

(54) **Rapid coupling device for hydrogen storage canister**
Schnellkupplungsvorrichtung für Wasserstoffspeicherbehalter
Dispositif de raccordement rapide pour un récipient de stockage de l'hydrogène

(30) Priority: 27.03.2003 CN 03121439
(43) Date of publication of application: 29.09.2004
(73) Proprietor: Asia Pacific Fuel Cell Technologies, Ltd., Chunan, Miaoli 350 (TW)
(72) Inventor: Yang, Jefferson YS, 4F 22, Ke-Dung 3 Road, Chunan, Miaoli 350 (TW); Hsu, Yao-Sheng, 4F 22, Ke-Dung 3 Road, Chunan, Miaoli 350 (TW)
(74) Representative: Goddar, Heinz J.

(56) References cited:
- EP-A- 0 813 264
- WO-A-00/52779
- WO-A-02/077511
- US-A- 6 015 209

## Description

### BACKGROUND OF THE INVENTION

### Field of the Invention

The invention relates to a connecting device for a hydrogen storage canister and a rapid coupling device therein; in particular, to a connecting device that can conveniently detach the hydrogen storage canister, with the features of first part of claim 1.

### Description of the Related Art

Recently, air pollution is more severe, and most of it comes from exhaust gas generated by gasoline engines. Thus, the pollution generated by the gasoline engine is worthy of consideration. To improve environmental quality, it is important to replace polluting gasoline engines with non-polluting fuel cells.

The structure and types of fuel cells are less relevant with this invention, their detailed description is omitted. Currently, fuel cells can be applied in many areas including the aerospace and military, power generation, and transportation areas. It is noted that fuel cells operate by combining oxygen and hydrogen, wherein oxygen is directly provided by the environment, and hydrogen is usually supplied by a hydrogen storage canister containing pure hydrogen.

European Patent No. 0183264 discloses a connection portion provided in a hydrogen passage between a sealing container for accommodating hydrogen occlusion alloy and a fuel cell for connecting the sealing container and the fuel cell de-touchable. In an embodiment, a core valve connector is used as a connection portion to the valve mounting seat at the container main body, which comprises a valve main body at the container main body side a push metal at the pressure reducing valve side. When the push metal is driven into the valve main body by screwing, a gap is formed and hydrogen gas flows out.

In another embodiment, a quick connector is used as the connection portion, which is driven to allow hydrogen flow by operating a clamper.

Since fuel cells and their peripheral equipment are still undergoing research, the technology is immature. For example, when a fuel cell is placed in an engine module of an electric scooter, the hydrogen storage canister must communicate with the fuel cell via a connecting device. Conventionally, a commercial quick connection device is used. Commercial quick connection devices, however, have the following disadvantages. The large size of a commercial quick connection device requires the fuel cell to occupy more space. The operation of a commercial quick connection device requires two steps, it is difficult to detach. Additionally, the commercial quick connection device is detached by rotation, and the device therein is easily damaged.

### SUMMARY OF THE INVENTION

In view of this, the invention provides a rapid coupling connecting device for a hydrogen storage canister that conveniently detaches from the hydrogen storage canister with the features of claim 1.

### BRIEF DESCRIPTION OF THE DRAWINGS

The present invention can be more fully understood by reading the subsequent detailed description and examples with references made to the accompanying drawings, wherein:
Fig. 1a is an exploded view of a connecting device for a hydrogen storage canister as disclosed in this invention;
Fig. 1b is a top view of the connecting device as shown in Fig. 1a;
Fig. 2a is a cross section of the connecting device in Fig. 1a, wherein a first connecting assembly is not connected to a second connecting assembly;
Fig. 2b is a cross section of the connecting device in Fig. 1a, wherein the first connecting assembly is connected to the second connecting assembly;
Fig. 2c is a cross section of the connecting device in Fig. 1a, wherein a separating member is moved to a fourth position;
Fig. 3 is a schematic view of the connecting device assembled on a hydrogen storage canister; and
Fig. 4 is a schematic view of an embodiment of the second connecting assembly as disclosed in this invention.

### DETAILED DESCRIPTION OF THE INVENTION

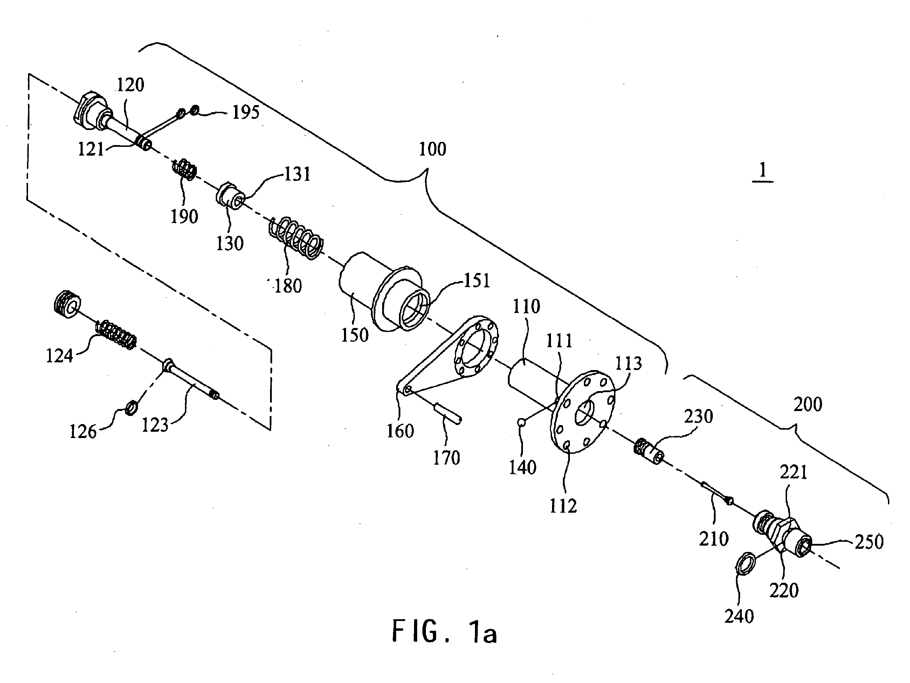

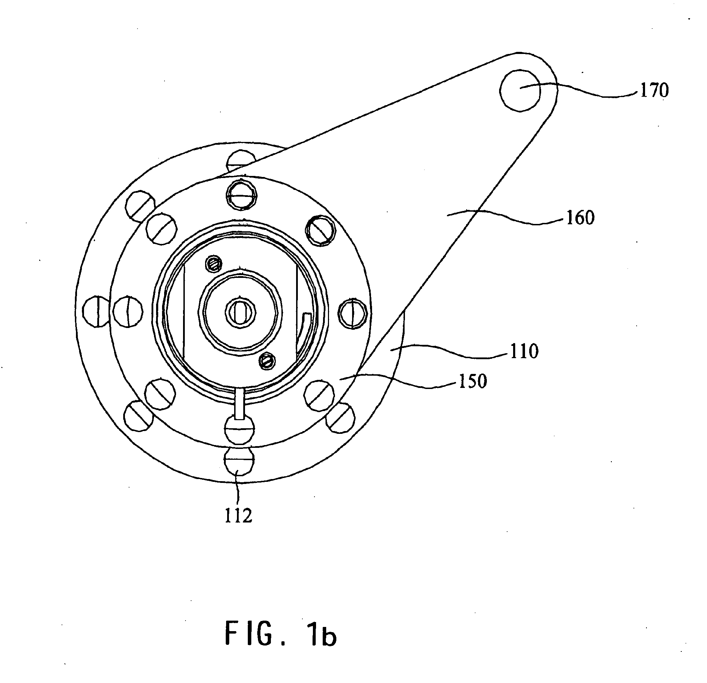

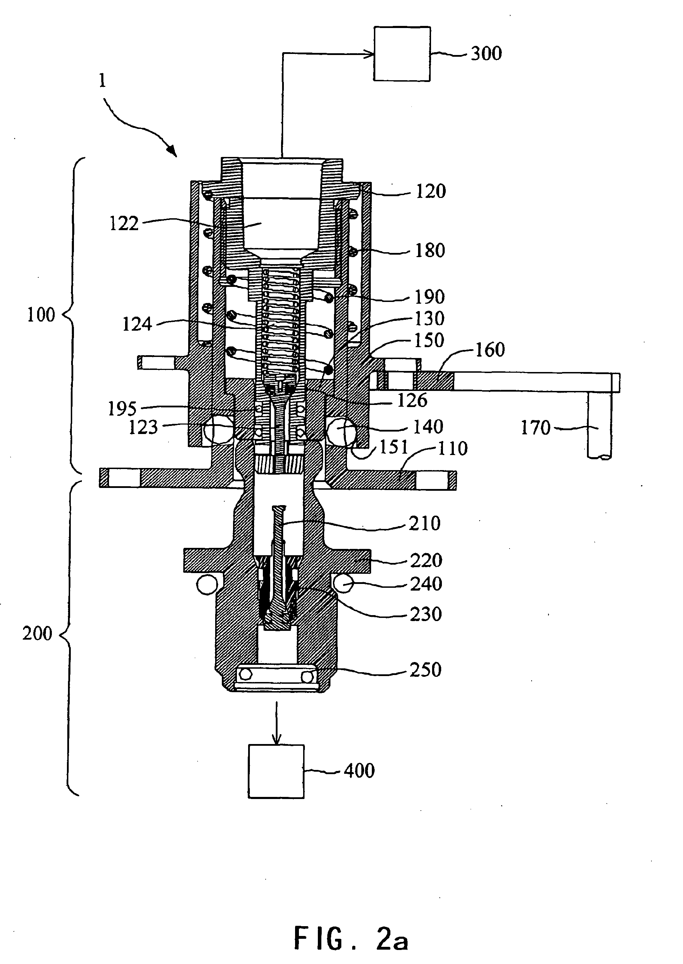

Referring to Fig. 1a and Fig. 2a, a connecting device 1 as disclosed in this invention is provided, and is used for communicating a hydrogen storage canister 400 and a fuel cell 300. The connecting device 1 includes a first connecting assembly 100 and a second connecting assembly 200. The first connecting assembly 100 is used as a rapid coupling device for the hydrogen storage canister 400 as disclosed in this invention.

As shown in Fig. 1a and Fig. 2a, the first connecting assembly 100 communicates with the fuel cell 300, and includes a base 110, a communicating member 120, a moving member 130, a plurality of abutting members 140, a separating member 150, an extension member 160, a rod 170, a first elastic member 180, a second elastic member 190, and two first seal members 195. It is noted that only one abutting member 140 is shown in Fig. 1a.

The base 110 is used as a body of the first connecting assembly 100, and is formed with a plurality of fixed holes 112 so as to be fixed. In addition, the base 110 is formed with a plurality of transverse through holes 111 in which the abutting members 140 are disposed. It is noted that only one through hole 111 is shown in Fig. 1a. The base 110 is formed with a longitudinally extending interior chamber 113 therein.

The communicating member 120 is coaxially received in the interior chamber 113 of the base 110, and is formed with two grooves 121 in which the first seal members 195 are disposed. The communicating member 120 is formed with a hollow portion 122 as shown in Fig. 2a, and includes a first ejector member 123, a third elastic member 124, and a second seal member 126. The hollow portion 122 communicates with the fuel cell 300. The first ejector member 123 is moveably disposed in the hollow portion 122 of the communicating member 120 to control the communication between the outside and the hollow portion 122 of the communicating member 120. The third elastic member 124 is disposed in the hollow portion 122 in a manner such that the third elastic member 124 is abutted by the first ejector member 123, and maintains the first ejector member 123 at a predetermined position. It is understood that the third elastic member 124 may be a compression spring. The second seal members 126 are disposed on the first ejector member 123 to seal the first ejector member 123 and the hollow portion 122. Thus, the communicating member 120 may be used as a channel communicating the outside and the first connecting assembly 100.

The moving member 130 is disposed in the interior chamber 113 of the base 110 and one end of the moving member 130 is projected from the communicating member 120. The moving member 130 is formed therein a longitudinally extending bore 131. A distal end of the communicating member 120 is coaxially received in the bore 131 of the moving member 130.

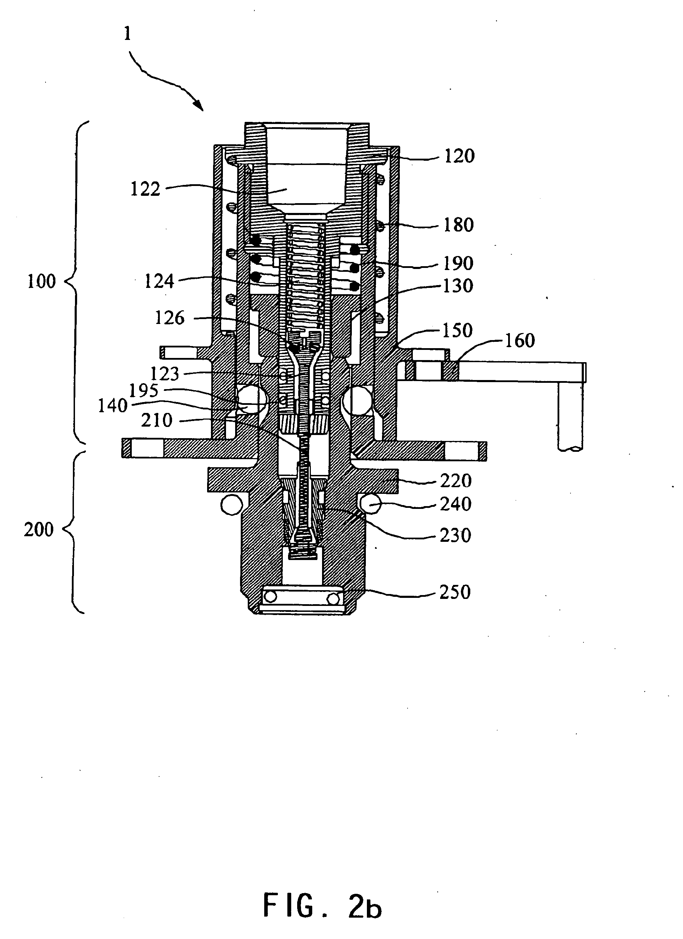

When the second connecting assembly 200 is not connected to the first connecting assembly 100, the moving member 130 is located at a position as shown in Fig. 2a (hereinafter referred to as a first position) so as maintain the abutting member 140 at a predetermined position. When the second connecting assembly 200 is connected to the first connecting assembly 100, the moving member 130 is located at a position as shown in Fig. 2b (hereinafter referred to as a second position) so that the abutting member 140 is away from the predetermined position and may move in a predetermined range.

Each of the abutting members 140 is disposed in the through holes 111 of the base 110 in a manner such that it is moved in a predetermined range. When the first connecting assembly 100 is inserted by the second connecting assembly 200, the second connecting assembly 200 is fixed in the first connecting assembly 100 by the abutting members 140. It is understood that each of the abutting members 140 may be a steel ball as shown in Fig. 1a. Furthermore, as shown in Fig. 2a, when the moving member 130 is located at the first position, the abutting member 140 is abutted between the moving member 130 and a circumferential groove **151** formed on an interior surface of the separating member **150.** When the moving member 130 is located at the second position, the abutting member 140 is abutted by a body 220 of the second connecting assembly 200.

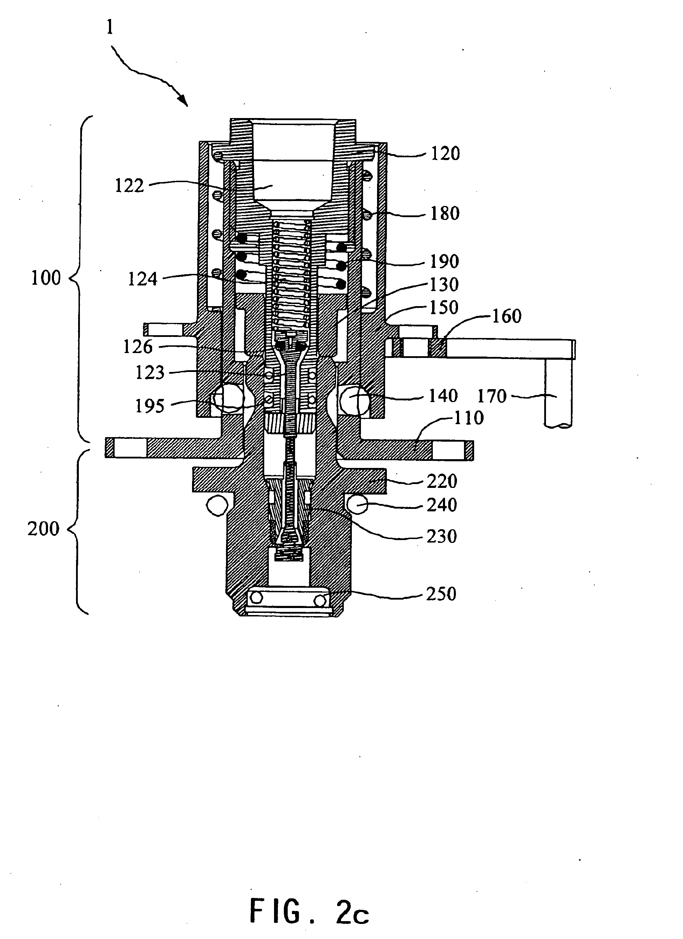

The separating member 150 is moveably disposed on the base 110, and separates the second connecting assembly 200 from the first connecting assembly 100. When the second connecting assembly 200 is connected to the first connecting assembly 100, the separating member 150 is located at a position as shown in Fig. 2b (hereinafter referred to as a third position) so as to be abutted by the abutting members 140. Thus, the abutting members 140 are abutted by the second connecting assembly 200 so that the second connecting assembly 200 is kept in the first connecting assembly 100. When the second connecting assembly 200 is separated from the first connecting assembly 100, the separating member 150 is moved upward so as to be located at a position as shown in Fig. 2c (hereinafter referred to as a fourth position). At this time, since the separating member 150 is moved upward, the abutting members 140 are moved outward. Thus, the second connecting assembly 200 cannot be abutted by the abutting members 140 so that the second connecting assembly 200 cannot be kept in the first connecting assembly 100. As a result, the second connecting assembly 200 can be separated from the first connecting assembly 100.

The extension member 160 is connected to the separating member 150, and the rod 170 is connected to the extension member 160. By means of the extension member 160 and the rod 170, the separating member 150 can be easily operated by the user.

As shown in Fig. 2b and Fig. 2c, the first elastic member 180 surrounds the base 110. The first elastic member 180 is abutted by the separating member 150 and the communicating member 120 respectively so as to move the separating member 150 between the third position and the fourth position. It is noted that the first elastic member 180 may be a compression spring.

As shown in Fig. 2a and Fig. 2b, the second elastic member 190 surrounds the communicating member 120, and is abutted by the moving member 130 and the communicating member 120 respectively so as to move the moving member 130 between the first position and the second position. It is noted that the second elastic member 190 may be a compression spring.

The first seal members 195 are disposed in the grooves 121 of the communicating member 120, and prevent air from entering through a gap between the communicating member 120 and the moving member 130. Each of the first seal members 195 may be an O-ring.

Referring to Fig. 1a and Fig. 2a, the second connecting assembly 200 is disposed in the hydrogen storage canister 400 and communicates with the hydrogen storage canister 400, and is connected to the first connecting assembly 100 in a detachable manner. The second connecting assembly 200 includes a body 220, a valve 230, a second ejector member 210, a third seal member 240, and a filter member 250.

The body 220 is used as a main component of the second connecting assembly 200, and is formed with a concave portion 221 in which the third seal member 240 is disposed. The valve 230 is disposed in the body 220, and the second ejector member 210 is moveably disposed in the valve 230. The third seal member 240 is disposed in the concave portion 221 of the body 220 so as to seal the second connecting assembly 200 and the hydrogen storage canister 400. The filter member 250 is disposed in the body 220, and filters hydrogen passing through the second connecting assembly 200.

It is noted that the second ejector member 210 is kept in the valve 230 by an elastic member (not shown).

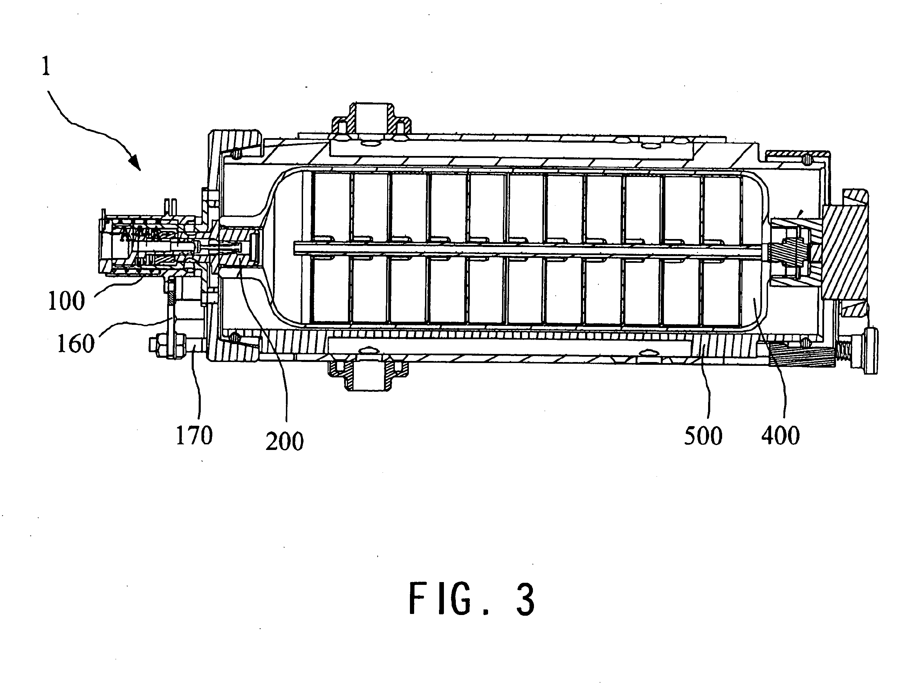

Referring to Fig. 3, the connecting device 1 is assembled on the hydrogen storage canister 400. Specifically, the second connecting assembly 200 is disposed in a container 500 of the hydrogen storage canister 400.

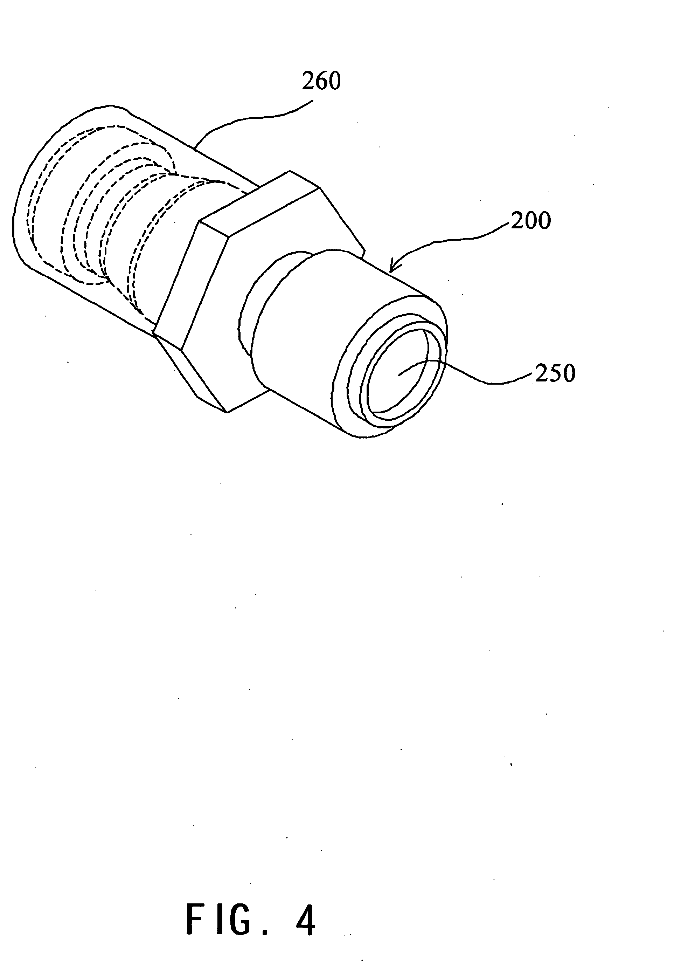

Furthermore, referring to Fig. 4, the connecting device 1 further includes a cover 260. When the second connecting assembly 200 is not connected to the first connecting assembly 100, the cover 260 is disposed on the second connecting assembly 200 so as to protect the second connecting assembly 200 on the hydrogen storage canister 400. In addition, since the cover 260 may be made of plastic that is lighter material, it can detect whether hydrogen in the hydrogen storage canister 400 has improperly leaked out. Specifically, when the hydrogen storage canister 400 is subjected to improper treatment so that received hydrogen leaks out, the cover 260 will be separated from the second connecting assembly 200. Thus, an abnormal situation may be easily observed by the user.

The structure of the connecting device 1 is described above, and its operation is described as follows referring to Figs. 2a-2c.

To connect the second connecting assembly 200 and the first connecting assembly 100, the top end of the body 220 is first abutted by the moving member 130 as shown in Fig. 2a while the second ejector member 210 is not abutted by the first ejector member 123. Then, the body 220 is moved upward to press the second elastic spring 190 via the moving member 130 until the second ejector member 210 is abutted by the first ejector member 123 of the communicating member 120 as shown in Fig. 2b. At this time, since the second ejector member 210 is abutted by the first ejector member 123, a gap is formed between the second ejector member 210 and the valve 230. Also, the first ejector member 123 is moved upward by the second ejector member **210** and thereby the second seal member 126 is separated from the inner wall of the communicating member 120. Thus, hydrogen in the hydrogen storage canister 400 can pass through the gap between the valve 230 and the second ejector member 210 and flow to the fuel cell 300 through the hollow portion 122 of the communicating member 120. Finally, the abutting members 140 are moved inward so as to be abutted by the body 220, and the second connecting assembly 200 is kept in the first connecting assembly 100.

To separate the second connecting assembly 200 from the first connecting assembly 100, the separating member 150 is moved upward to press the first elastic member 180 as shown in Fig. 2c. At this time, the abutting members 140 can be moved outward due to the movement of the separating member 150, and it is separated from the body 220. Thus, the second connecting assembly 200 can be separated from the first connecting assembly 100. It is noted that the first ejector member 123 can be pressed back to a fixed position by the third elastic member 124 at this time, and the second seal member 126 can be abutted by the inner wall of the communicating member 120 again. Thus, ambient air can be prevented from entering the communicating member 120.

The connecting device of this invention has the following advantages. Since the connecting device of this invention is designed for a hydrogen storage canister and fuel cell, its size can be minimized. Thus, the space required by the fuel cell can be minimized. Since the hydrogen storage canister can be separated from the fuel cell by simply moving the separating member, it is conveniently detached. Since the detachment is performed in a linear manner without rotation, the device therein avoids damage.

It is understood that the fuel cell is used as an object that the hydrogen storage canister supplies in this description. However, in practice, it is not limited to this; that is the connecting device of this invention can be applied to other equipment that requires a hydrogen storage canister to supply hydrogen.

## Claims

1. A rapid coupling device (1) includes a first connecting assembly (100) with a base (110), the base (110) having a longitudinally extending interior chamber (113) and at least one transverse through hole (111), a communicating member (120) formed with a hollow portion (122) being coaxially received in the interior chamber (113) of the base (110), **characterized in that** the first connecting assembly (100) comprises:
a moving member (130) coaxially received in the interior chamber (113) of the base (110), the moving member (130) having formed therein a longitudinally extending bore (131), the moving member (130) being biased in a first position and longitudinally displaceable in the base (110) to a second position;
a separating member (150) coaxially disposed on an exterior of the base (110), the separating member (150) having formed on an interior surface thereof a circumferential groove (151), the separating member (150) being biased in a third position and longitudinally displaceable on the base (110) to a fourth position;
at least one abutting member (140) selectively displaceable in each transverse through hole (111), the abutting member (140) being forced into the circumferential groove (151) of the separating member (150) when the moving member (130) is in the first position and the separating member (150) is in the fourth position, the abutting member (140) being forced to the interior chamber (113) of the base (110) when the moving member (130) is in the second position and the separating member (150) is in the third position;
the moving member (130) being longitudinally displaced relative to the communicating member (120) to thereby expose a distal end of the communicating member (120) longitudinally beyond the moving member (130), the distal end of the communicating member (120) being received in the interior chamber (113) of the base (110) and retained therein when the moving member (130) is in the second position and the separating member (150) is in the third position; and
a first ejector member (123), moveably disposed in the hollow portion (122) of the communicating member (120), for controlling the communication between an outside and the hollow portion (122) of the communicating member (120).

2. The rapid coupling device (1) as claimed in claim 1, wherein the abutting member (140) is a steel ball.

3. The rapid coupling device (1) as claimed in claim 1, further comprising:
an extension member (160) connected to the separating member (150); and
a rod (170) connected to the extension member (160).

4. The rapid coupling device (1) as claimed in claim 1, further comprising:
a first elastic member (180), surrounding the base (110), respectively retained at opposing ends thereof by the separating member (150) and the communicating member (120).

5. The rapid coupling device (1) as claimed in claim4, further comprising:
a second elastic member (190), surrounding the communicating member (120), respectively retained at opposing ends thereof by the moving member (130) and the communicating member (120); and
a first seal member (195) received in a groove (121) of the communicating member (120).

6. The rapid coupling device (1) as claimed in claim 5, further comprising:
a third elastic member (124), disposed in the hollow portion (122) of the communicating member (120) in a manner such that the third elastic member (124) is abutted by the first ejector member (123), for maintaining the first ejector member (123) at a predetermined position; and
a second seal member (126), disposed on the first ejector member (123), for sealing the first ejector member (123) and the hollow portion (122).

7. The rapid coupling device (1) as claimed in claim 1, wherein the first connecting assembly (100) is coupled to a fuel cell (300) through the communicating member (120).

8. The rapid coupling device (1) as claimed in claim 1, further comprising a second connecting assembly (200) connected to the first connecting assembly (100) in a detachable manner, the second connecting assembly (200) being disposed in a hydrogen storage canister (400) and including a second ejector member (210), wherein the communicating member (120) is abutted by the second ejector member (210) so that hydrogen in the hydrogen storage canister (400) flows to the fuel cell (300) through the second connecting assembly (200) and the first connecting assembly (100) when the second connecting assembly (200) is connected to the first connecting assembly (100).

9. The connecting device (1) as claimed in claim 8, wherein the second connecting assembly (200) further comprises:
a body (220), including a concave portion (221), disposed in the hydrogen storage canister (400); and
a valve (230) disposed in the body (220), wherein the second ejector member (210) is moveably disposed in the valve (230).

10. The connecting device (1) as claimed in claim 9, wherein the second connecting assembly (200) further comprises a third seal member (240) disposed in the concave portion (221).

## Patentansprüche

1. Eine Schnellkupplungsvorrichtung (1) weist eine erste Verbindungsanordnung (100) mit einer Basis (110), die eine sich längs erstreckende Innenkammer (113) mit wenigstens eine Querdurchbohrung (111) hat, und ein Übertragungselement (120, das mit einem hohlen Abschnitt (122), der koaxial von der Innenkammer (113) der Basis (110) aufgenommen wird, auf, **dadurch gekennzeichnet, dass** die erste Verbindungsanordnung (100) aufweist:
- ein Bewegungselement (130), das koaxial von der Innenkammer (113) der Basis (110) aufgenommen wird, wobei die Bewegungskammer (130) mit einer sich längs erstreckenden Bohrung (131) ausgebildet ist und in eine erste Position vorbelastet und in Längsrichtung in der Basis (110) in eine zweite Position verlagerbar ist;
- eine Trennelement (150), das koaxial außerhalb der Basis (110) angeordnet ist, wobei das Trennelement (150) auf einer Innenfläche mit einer umlaufenden Kerbe (151) versehen ist und in eine dritte Position vorbelastet und auf der Basis (110) in eine vierte Position verlagerbar ist;
- wenigstens ein Anstoßelement (140), das wahlweise in der Querdurchbohrung (111) verlagerbar ist, wobei das Anstoßelement (140) in die umlaufende Kerbe (151) des Trennelements (150) gezwungen wird, wenn das Bewegungselement (130) in der ersten Position ist und das Trennelement (150) in der vierten Position ist, wobei das Anstoßelement (140) zu der Innenkammer (113) der Basis (110) gezwungen wird, wenn das Bewegungselement (130) in der zweiten Position und das Trennelement (150) in der dritten Position ist;
- das Bewegungselement (130) in Längsrichtung relativ zu dem kommunizierenden Element (120) verlagert ist, um so ein distales Ende des Übertragungslements (120) in Längsrichtung über das Bewegungselement (120) hinaus frei zu legen, wobei das distale Ende des kommunizierenden Elements (120) von der Innenkammer (113) der Basis (110) aufgenommen und in dieser festgehalten wird, wenn das Bewegungselement (130) in der zweiten Position ist und das Trennelement (150) in der dritten Position ist; und
- ein erstes Auswurfelement (123), das in dem hohlen Abschnitt (122) des Kommunikationselements (120) beweglich angeordnet ist, zum Steuern der Übertragung zwischen der Außenseite des hohlen Elements (122) und dem Übertragungselement (120).

2. Die Schnellkupplungsvorrichtung (1) nach Anspruch 1, wobei das Anstoßelement (140) eine Stahlkugel ist.

3. Die Schnellkupplungsvorrichtung (1) nach Anspruch 1, weiter mit:
- einem Extensionselement (160), das mit dem Trennelement (150) verbunden ist; und
- eine Stange (170), die mit dem Extensionselement (160) verbunden ist.

4. Die Schnellkupplungsvorrichtung (1) nach Anspruch 1, weiter mit:
- einem ersten elastischen Element (180), das die Basis (110) umgibt bzw. an gegenüberliegenden Enden der Basis durch das Trennelement (150) und dem Kommunikationselement (120) zurück gehalten wird.

5. Die Schnellkupplungsvorrichtung (1) nach Anspruch 4, weiter mit:
- einem zweiten elastischen Element (190), das das Übertragungselement (120) umgibt bzw. an dessen gegenüberliegenden Enden durch das Bewegungselement (130) und das Übertragungselement (120 zurückgehalten wird, und
- ein erstes Lichtelement (195), das von einer Kerbe (121) des Übertragungselements (120) aufgenommen wird.

6. Die Schnellkupplungsvorrichtung (1) nach Anspruch 5, weiter mit:
- einem dritten elastischen Element (124), das in dem hohlen Abschnitt (122) des Übertragungselements (120) in einer solchen Weise angeordnet ist, dass das dritte elastische Element (124) von dem ersten Auswurfelement (123) angestoßen wird zum Halten des ersten Auswurfelements (123) in einer vorgegebenen Position, und
- ein zweites Sichtelement (126), das in dem ersten Auswurfelement (123) angeordnet ist, zum Abdichten des ersten Auswurfelements (123) und des hohlen Abschnitts (122).

7. Die Schnellkupplungsvorrichtung (1) nach Anspruch 1, wobei die erste Verbindungsanordnung (100) mit einer Brennstoffzelle (300) über das Übertragungselement (120) gekuppelt ist.

8. Die Schnellkupplungsvorrichtung (1) nach Anspruch 1, weiter mit einer zweiten Verbindungsanordnung (200), die mit der ersten Verbindungsanordnung (100) in einer lösbaren Weise verbunden ist, wobei die zweite Verbindungsanordnung (200) in einem Wasserstoffspeicherbehälter (400) angeordnet ist und ein zweites Auswurfelement (210) aufweist, wobei das Übertragungselement von dem zweiten Auswurfelement (210) angestoßen wird, so dass Wasserstoff in den Wasserstoffspeicherbehälter (400) zu der Brennstoffzelle (300) durch die zweite Verbindungsanordnung (200) und die erste Verbindungsanordnung (100) strömt, wenn die zweite Verbindungsanordnung (200) mit der ersten Verbindungsanordnung (100) verbunden ist.

9. Die Verbindungsanordnung (1) nach Anspruch 8, wobei die zweite Verbindungsanordnung (200) weiter aufweist:
- einen Körper (220) mit einem konkaven Abschnitt (221), der in dem Wasserstoffspeicherbehälter (400) angeordnet ist; und
- ein Ventil (230), das in dem Körper (220) angeordnet ist, wobei das zweite Auswurfelement (210) beweglich in dem Ventil (230) angeordnet ist.

10. Die Verbindungsanordnung (1) nach Anspruch 9, wobei die zweite Verbindungsanordnung (200) weiter ein drittes Sichtelement (240) aufweist, das in dem konkaven Abschnitt (221) angeordnet ist.

## Revendications

1. Dispositif de couplage à raccordement rapide (1) comprenant un premier ensemble de raccordement (100) ayant une base (110), la base (110) présentant une chambre intérieure s'étendant dans un sens longitudinal (113) et au moins un orifice traversant dans un sens transversal (111), un élément de communication (120) formé avec une partie creuse (122) étant reçu dans un sens coaxial dans la chambre intérieure (113) de la base (110), **caractérisé en ce que** le premier ensemble de raccordement (100) comprend :
un élément mobile (130) reçu dans un sens coaxial dans la chambre intérieure (113) de la base (110), l'élément mobile (130) ayant formé dans la chambre un trou percé dans un sens longitudinal (131), l'élément mobile (130) étant sollicité dans une première position et étant déplaçable dans un sens longitudinal (110) à une deuxième position ;
un élément de séparation (150) placé dans un sens coaxial sur une face extérieure de la base (110), l'élément de séparation (150) ayant formé sur une surface intérieure de l'élément une rainure circonférentielle (151), l'élément de séparation (150) étant sollicité dans une troisième position et étant déplaçable dans un sens longitudinal sur la base (110) jusqu'à une quatrième position ;
au moins un élément de butée (140) sélectivement déplaçable dans chaque orifice traversant dans un sens transversal (111), l'élément de butée (140) étant entraîné dans la rainure circonférentielle (151) de l'élément de séparation (150) lorsque l'élément mobile (130) se situe dans la première position et l'élément de séparation (150) se situe dans la quatrième position, l'élément de butée (140) étant entraîné dans la chambre intérieure (113) de la base (110) lorsque l'élément mobile (130) se situe dans la deuxième position et l'élément de séparation (150) se situe dans la troisième position ;
l'élément mobile (130) étant déplacé dans un sens longitudinal relativement à l'élément de communication (120) pour exposer ainsi une extrémité distale de l'élément de communication (120) dans un sens longitudinal au-delà de l'élément mobile (130), l'extrémité distale de l'élément de communication (120) étant reçue dans la chambre intérieure (113) de la base (110) et retenue dans la chambre lorsque l'élément mobile (130) se situe à la deuxième position et l'élément de séparation (150) se situe à la troisième position ; et
un premier élément d'éjection (123), placé de façon mobile dans la partie creuse (122) de l'élément de communication (120), afin de contrôler la communication entre une partie extérieure et la partie creuse (122) de l'élément de communication (120).

2. Dispositif de couplage à raccordement rapide (1) selon la revendication 1, dans lequel l'élément de butée (140) est une bille d'acier.

3. Dispositif de couplage à raccordement rapide (1) selon la revendication 1, comprenant en outre :
un élément d'extension (160) raccordé à l'élément de séparation (150) ; et
une tige (170) raccordée à l'élément d'extension (160).

4. Dispositif de couplage à raccordement rapide (1) selon la revendication 1, comprenant en outre :
un premier élément élastique (180) entourant la base (110), retenu respectivement à des extrémités opposées de celui-ci par l'élément de séparation (150) et l'élément de communication (120).

5. Dispositif de couplage à raccordement rapide (1) selon la revendication 4, comprenant en outre :
un deuxième élément élastique (190) entourant l'élément de communication (120), retenu respectivement à des extrémités opposées de celui-ci par l'élément mobile (130) et l'élément de communication (120) ; et
un premier élément d'étanchéité (195) reçu dans une rainure (121) de l'élément de communication (120).

6. Dispositif de couplage à raccordement rapide (1) selon la revendication 5, comprenant en outre :
un troisième élément élastique (124) placé dans la partie creuse (122) de l'élément de communication (120) de manière à ce que le troisième élément élastique (124) soit confiné de près par le premier élément d'éjection (123), afin de maintenir le premier élément d'éjection (123) à une position prédéterminée ; et
un deuxième élément d'étanchéité (126) placé sur le premier élément d'éjection (123), afin d'étanchéiser le premier élément d'éjection (123) et la partie creuse (122).

7. Dispositif de couplage à raccordement rapide (1) selon la revendication 1, dans lequel le premier ensemble de raccordement (100) est couplé à une pile à combustible (300) après avoir traversé l'élément de communication (120)

8. Dispositif de couplage à raccordement rapide (1) selon la revendication 1, comprenant en outre un deuxième ensemble de raccordement (200) connecté d'une manière amovible au premier ensemble de raccordement (100), le deuxième ensemble de raccordement (200) étant placé dans un contenant de stockage d'hydrogène (400) et comprenant un deuxième élément d'éjection (210), dans lequel l'élément de communication (120) est confiné de près par le deuxième élément d'éjection (210) de manière à ce que l'hydrogène dans le contenant de stockage d'hydrogène (400) s'écoule dans la pile à combustible (300) à travers le deuxième ensemble de raccordement (200) et le premier ensemble de raccordement (100) lorsque le deuxième ensemble de raccordement (200) est connecté au premier ensemble de raccordement (100).

9. Dispositif de couplage à raccordement rapide (1) selon la revendication 8, dans lequel le deuxième ensemble de raccordement (200) comprend en outre :
un corps (220), y compris une partie concave (221), placé dans le contenant de stockage d'hydrogène (400) ; et
une valve (230) placée dans le corps (220), dans lequel le deuxième élément d'éjection (210) est placé de manière amovible dans la valve (230)

10. Dispositif de raccordement (1) selon la revendication 9, dans lequel le deuxième ensemble de raccordement (200) comprend en outre un troisième élément d'étanchéité (240) placé dans la partie concave (221).
